# EUROPEAN PATENT APPLICATION

(11) **EP 4 648 479 A1**
(43) Date of publication of application: **12.11.2025**
(21) Application number: 25175287.9
(22) Date of filing: 09.05.2025
(51) Int. Cl.: H04W 36/00, H04W 36/08

(54) **METHOD OF MOBILITY MANAGEMENT AND DEVICE USING THE SAME**

(30) Priority: 10.05.2024 US 202463645148 P
(71) Applicant: Industrial Technology Research Institute, 310401 Hsinchu (TW)
(72) Inventor: Huang, Nai-Lun, 302 Zhubei City, Hsinchu County (TW)
(74) Representative: Becker Kurig & Partner Patentanwälte mbB

(57) **Abstract**

A method of mobility management, a user equipment, and a base station are provided. The method includes receiving a network configuration, wherein the network configuration includes at least one candidate configuration, a serving cell's group identifier, and a group identifier for each of the at least one candidate configuration. Storing the serving cell's group identifier. Receiving a signaling for triggering a cell switching. The serving cell's group identifier is used by the UE to determine whether an inter- centralized unit (inter-CU) level configuration is needed or not upon the cell switching. The inter-CU level configuration includes at least one of the following: a security key update, a packet data convergence protocol (PDCP) entity reestablishment, or a radio resource control (RRC) configuration.

## Description

### BACKGROUND

### Technical Field

The disclosure is directed to a method of mobility management, a user equipment (UE), and a base station (BS).

### Description of Related Art

Intra-centralized unit (intra-CU) Layer 1/Layer 2 (L1/L2) triggered mobility (LTM) offers improvement in mobility latency compared to Layer 3 (L3) based mobility. However, intra-CU LTM is only supported for mobility between cells within the same Next Generation Node B (gNB) or within the same CU. Accordingly, the opportunities for using LTM are significantly limited.

### SUMMARY

The disclosure provides a method of mobility management, and a UE and a BS using the same method. The disclosure may manage mobility for cell switching within the same CU or between different CUs.

The present disclosure is directed to a method of mobility management suitable for a user equipment. The method includes receiving a network configuration, wherein the network configuration includes at least one candidate configuration, a serving cell's group identifier, and a group identifier for each of the at least one candidate configuration. Storing the serving cell's group identifier; and receiving a signaling for triggering a cell switching. The serving cell's group identifier is used by the UE to determine whether an inter-centralized unit (inter-CU) level configuration is needed or not upon the cell switching. The inter-CU level configuration includes at least one of the following: a security key update, a packet data convergence protocol (PDCP) entity re-establishment, or a radio resource control (RRC) configuration.

The present disclosure is directed to a method of mobility management suitable for a base station. The method includes transmitting a network configuration to a user equipment. The network configuration includes at least one candidate configuration, a serving cell's group identifier, and a group identifier for each of the at least one candidate configuration. Transmitting a signaling for triggering a cell switching to the user equipment.

The present disclosure is directed to a user equipment. The user equipment includes a transceiver and a processor. The processor is coupled to the transceiver, wherein the processor is configured to receive, via the transceiver, a network configuration. The network configuration includes at least one candidate configuration, a serving cell's group identifier, and a group identifier for each of the at least one candidate configuration. The processor is configured to store the serving cell's group identifier; and receive, via the transceiver, a signaling for triggering a cell switching. The serving cell's group identifier is used by the UE to determine whether an inter- centralized unit (inter-CU) level configuration is needed or not upon the cell switching. The inter-CU level configuration includes at least one of the following: a security key update, a packet data convergence protocol (PDCP) entity re-establishment, or a radio resource control (RRC) configuration.

The present disclosure is directed to a base station. The base station includes a transceiver and a processor. The processor is coupled to the transceiver, wherein the processor is configured to transmit, via the transceiver, a network configuration to a user equipment. The network configuration comprises at least one candidate configuration, a serving cell's group identifier, and a group identifier for each of the at least one candidate configuration. The processor is configured to transmit, via the transceiver, a signaling for triggering a cell switching to the user equipment.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of a network framework according to one embodiment of the present disclosure.
FIG. 2 illustrates a flowchart of mobility management according to one embodiment of the present disclosure.
FIG. 3 illustrates a schematic diagram of the network framework according to one embodiment of the present disclosure.
FIG. 4 illustrates a flowchart of mobility management according to one embodiment of the present disclosure.
FIG. 5 illustrates a flowchart of re-establishment of packet data convergence protocol (PDCP) entity according to one embodiment of the present disclosure.
FIG. 6 illustrates a flowchart of re-establishment of radio link control entity according to one embodiment of the present disclosure.
FIG. 7 illustrates a flowchart of reset of medium access control entity according to one embodiment of the present disclosure.
FIG. 8 illustrates a flowchart of update of security key according to one embodiment of the present disclosure.
FIG. 9 illustrates a flowchart of cell switching according to one embodiment of the present disclosure.
FIG. 10 illustrates a flowchart of a method of mobility management according to one embodiment of the present disclosure.
FIG. 11 illustrates a flowchart of a method of mobility management according to one embodiment of the present disclosure.
FIG. 12 illustrates a schematic diagram of a communication device according to one embodiment of the present disclosure.

### DESCRIPTION OF THE EMBODIMENTS

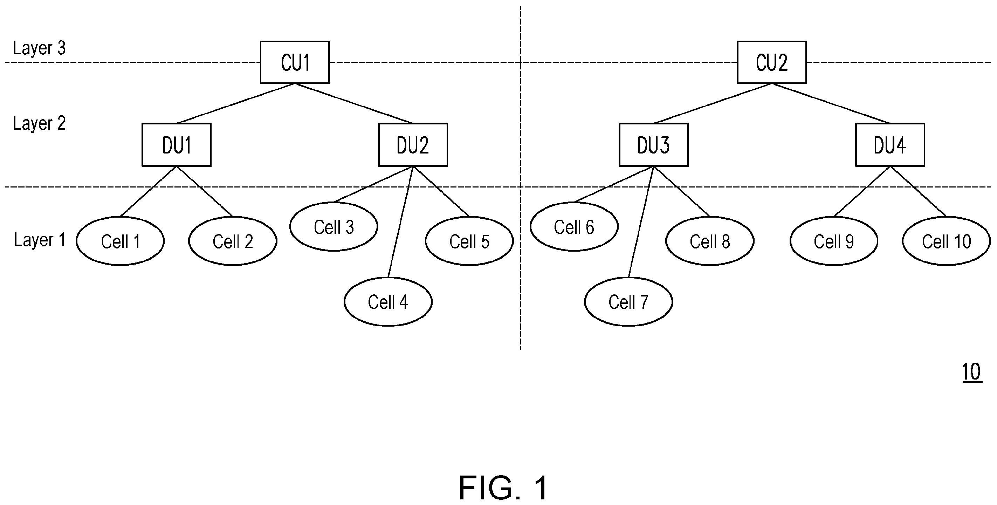

FIG. 1 illustrates a schematic diagram of a network framework 10 according to one embodiment of the present disclosure. The network framework 10 may include one or more CUs, such as CU 1 and CU 2. Each CU may have one or more distributed units (DUs). For example, CU 1 may have distributed units including DU 1 and DU 2 and CU 2 may have distributed units including DU 3 and DU 4. Each DU may have one or more Cells. For example, DU 1 may have Cells including Cell 1 and Cell 2. DU 2 may have Cells including Cell 3, Cell 4, and Cell 5. DU 3 may have Cells including Cell 6, Cell 7, and Cell 8. DU 4 may have Cells including Cell 9 and Cell 10.

An LTM configuration may be pre-configured to a UE. The UE may perform cell switching at the L1/L2 level based on the LTM configuration. The LTM based mobility can offer improvements in mobility latency and interruption time compared to L3 based mobility. For example, if the network (or BS) triggers the UE to switch from Cell 2 to Cell 4, the UE may perform cell switching according to the LTM configuration. However, LTM operation is only supported for mobility between cells within the same CU (the same gNB). For example, if the network triggers the UE to switch from Cell 5 to Cell 6, the UE may not use the LTM configuration since Cell 5 and Cell 6 belong to different CUs. The UE may perform an L3 level configuration, for example a radio resource control (RRC) configuration procedure, which may need longer mobility latency, to achieve the cell switching. That is, the deployment of the network may significantly limit the opportunities to use LTM. In order to allow serving CU to be changed during subsequent cell switching procedure and avoid the L3 level configuration procedure in one or more cell switchings of the subsequent cell switching procedure if the L3 level configuration is not needed for the one or more cell switchings, the network may provide information to make UE distinguish between intra-CU mobility and inter-CU mobility.

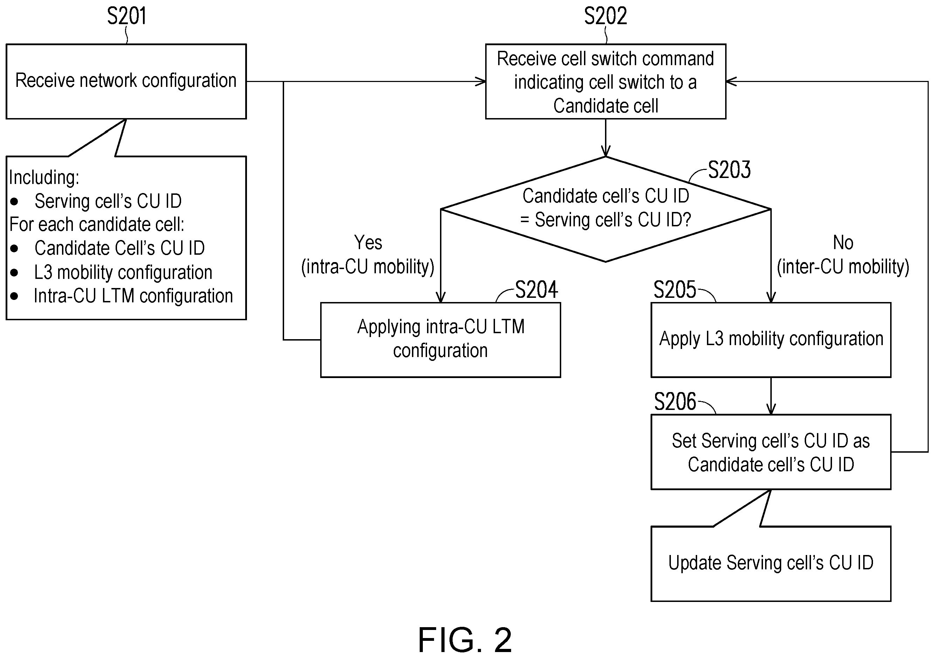

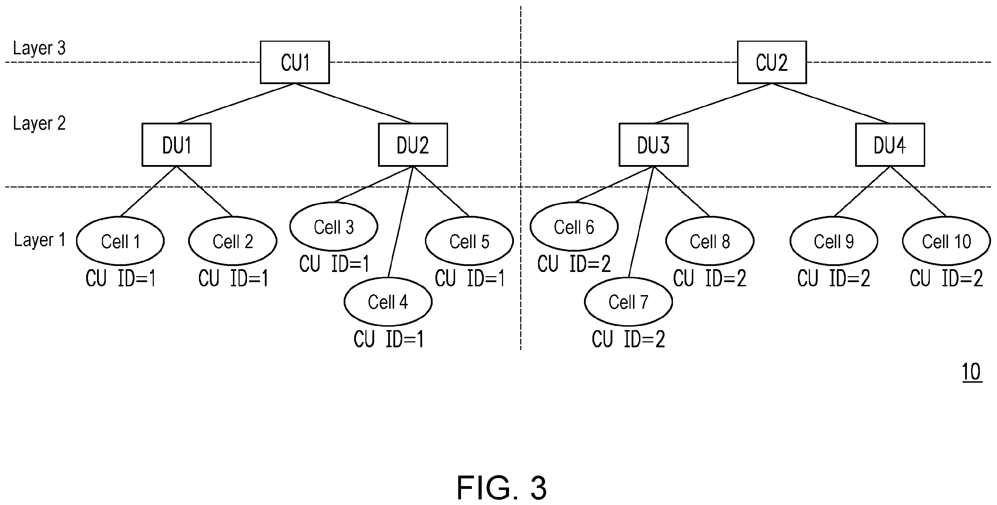

FIG. 2 illustrates a flowchart of mobility management according to one embodiment of the present disclosure. In step S201, a UE may receive a network configuration from a network and may save the information of network configuration in a storage medium. The network configuration may include information of the serving cell of the UE and information of one or more candidate cells. The information of the serving cell may include a group identifier (ID) for the serving cell, wherein the group ID may include a CU ID. For example, assume that the cell serves the UE currently is Cell 5. The UE may obtain the group ID for Cell 5 from the network configuration, wherein the group ID for Cell 5 may be the ID of CU 1 (i.e., CU ID = 1), as shown in FIG. 3.

The information of each candidate cell may include a group ID for the candidate cell, a first configuration, and a second configuration. The group ID for the candidate cell may include a CU ID. The first configuration may be a L3 mobility configuration (or an inter-CU level configuration). For example, the L3 mobility configuration (or an inter-CU level configuration) may include an RRC configuration for the UE to perform a handover or an inter-CU cell switching, a security update, or a PDCP entity re-establishment. The second configuration may be an intra-CU LTM configuration (or an intra-CU level configuration). For example, the UE may obtain information of a plurality of candidate cells from the network configuration, wherein the plurality of candidate cells may include Cell 1, Cell 2, Cell 3, Cell 4, Cell 6, Cell 7, Cell 8, Cell 9, and Cell 10. The group IDs for Cell 1, Cell 2, Cell 3, and Cell 4 may be the ID of CU 1 (i.e., CU ID = 1), and the group IDs for Cell 6, Cell 7, Cell 8, Cell 9, and Cell 10 may be the ID of CU 2 (i.e., CU ID = 2), as shown in FIG. 3.

In step S202, the UE may receive a signaling of a cell switch command from the network. The cell switch command may include an indication indicating the UE to perform cell switching to a target candidate cell. The UE may determine a target candidate cell to switch to according to the indication. The signaling may include information associated with a target candidate cell or a configuration of the target candidate cell.

In step S203, the UE may determine whether the L3 mobility configuration (or the inter-CU level configuration) is needed (or required) by determining whether the candidate cell's CU ID is equal to the serving cell's CU ID. In other words, the UE may compare the candidate cell's CU ID with the serving cell's CU ID and determine whether these CU IDs are the same or not. The UE may select the intra-CU LTM configuration or the L3 mobility configuration as a selected configuration for cell switching. If the candidate cell's CU ID is equal to the serving cell's CU ID, the UE may execute step S204. If the candidate cell's CU ID is different from the serving cell's CU ID, the UE may execute step S205. Take FIG. 3 as example, if the serving cell is Cell 5 and the candidate cell indicated by the cell switch command is Cell 4, the UE may determine that the candidate cell's CU ID (i.e., CU ID = 1) is equal to the serving cell's CU ID (i.e., CU ID = 1). If the serving cell is Cell 5 and the candidate cell indicated by the cell switch command is Cell 6, the UE may determine that the candidate cell's CU ID (i.e., CU ID = 2) is different from the serving cell's CU ID (i.e., CU ID = 1).

In step S204, the UE may apply the intra-CU LTM configuration to perform cell switching. For example, the UE may switch from Cell 5 to Cell 4 based on the intra-CU LTM configuration.

In step S205, the UE may apply the L3 mobility configuration to perform cell switching. For example, the UE may switch form Cell 5 to Cell 6 based on the L3 mobility configuration.

In step S206, the UE may update the serving cell's CU ID saved by the UE. Specifically, the UE may set the serving cell's CU ID as the candidate cell's CU ID. In other words, the UE may replace the original stored serving cell's CU ID with the candidate cell's CU ID. For example, after the UE switching from Cell 5 to Cell 6, the UE may update the serving cell's CU ID from CU ID = 1 to CU ID = 2.

In one embodiment, a candidate cell's No Reset ID, a serving cell's No Reset ID and a radio link control (RLC) re-establishment indicator may further be pre-configured to the UE. If the candidate cell's CU ID is equal to the serving cell's CU ID and the candidate cell's No Reset ID is equal to the serving cell's No Reset ID, the UE may determine that L2 reset might be not needed and may determine whether the RLC re-establishment indicator is true or false. If the RLC re-establishment indicator is false, the UE may apply the intra-CU LTM configuration to perform cell switching without RLC re-establishment. If the RLC re-establishment indicator is true, the UE may apply the intra-CU LTM configuration to perform cell switching with RLC re-establishment. On the other hand, if the candidate cell's CU ID is equal to the serving cell's CU ID but the candidate cell's No Reset ID is not equal to the serving cell's No Reset ID, the UE may determine that L2 reset might be needed. Accordingly, the UE may apply the intra-CU LTM configuration to perform cell switching with L2 reset. The UE may update the serving cell's No Reset ID saved by the UE by setting the serving cell's No Reset ID as the candidate cells' No Reset ID.

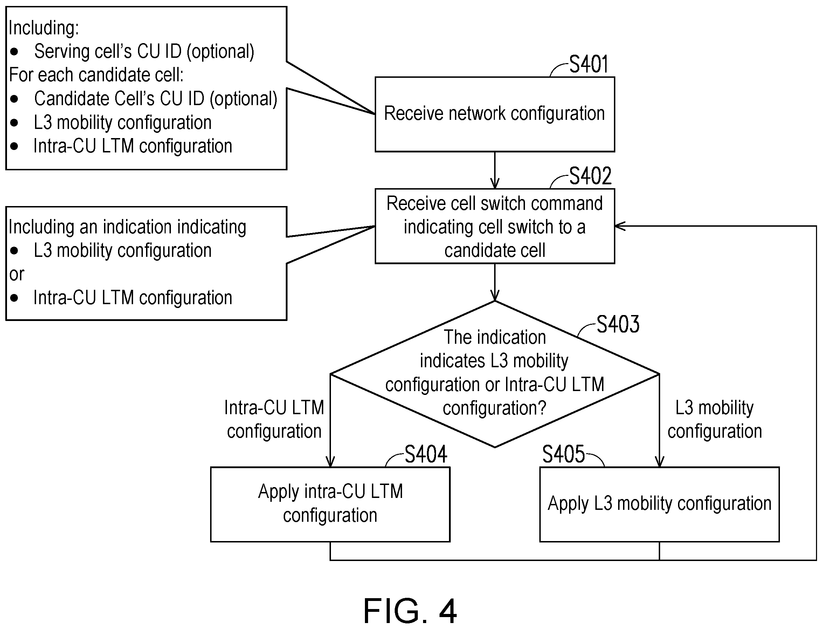

FIG. 4 illustrates a flowchart of mobility management according to one embodiment of the present disclosure. In step S401, a UE may receive a network configuration from a network and may save the information of the network configuration in a storage medium. The network configuration may include information of one or more candidate cells. The information of each candidate cell may include a first configuration and a second configuration, wherein the first configuration may be a L3 mobility configuration and the second configuration may be an intra-CU LTM configuration. For example, the UE may obtain information of a plurality of candidate cells from the network configuration, wherein the plurality of candidate cells may include Cell 1, Cell 2, Cell 3, Cell 4, Cell 6, Cell 7, Cell 8, Cell 9, and Cell 10. The group IDs for Cell 1, Cell 2, Cell 3, and Cell 4 may be the ID of CU 1 (i.e., CU ID = 1), and the group IDs for Cell 6, Cell 7, Cell 8, Cell 9, and Cell 10 may be the ID of CU 2 (i.e., CU ID = 2), as shown in FIG. 3.

In step S402, the UE may receive a cell switch command from the network. The cell switch command may indicate the UE to perform cell switching to a target candidate cell. The UE may determine a target candidate cell to switch to according to the cell switch command. The cell switch command may further include an indication indicating that the L3 mobility configuration or the intra-CU LTM configuration should be applied. The UE may determine whether the L3 mobility configuration or the intra-CU LTM configuration is needed based on the indication. For example, the cell switch command may include a 1-bit indication. If the value of the indication is true (e.g., 1), the indication indicates that the L3 mobility configuration should be applied. If the value of the indication is false (e.g., 0), the indication indicates that the intra-CU LTM configuration should be applied.

In step S403, the UE may determine whether to apply the L3 mobility configuration or the intra-CU LTM configuration based on the indication. If the indication indicates that the intra-CU LTM configuration should be applied, the UE may execute step S404. If the indication indicates that the L3 mobility configuration should be applied, the UE may execute step S405.

In step S404, the UE may apply the intra-CU LTM configuration to perform cell switching. For example, if the network attempts to command the UE to switch from Cell 5 to Cell 4, the network may transmit a cell switch command indicating the intra-CU LTM configuration to the UE. The UE may apply the intra-CU LTM configuration to switch from Cell 5 to Cell 4, as shown in FIG. 3.

In step S405, the UE may apply the L3 mobility configuration to perform cell switching. For example, if the attempts to command the UE to switch from Cell 5 to Cell 6, the network may transmit a cell switch command indicating the L3 mobility configuration to the UE. The UE may apply the L3 mobility configuration to switch from Cell 5 to Cell 6, as shown in FIG. 3.

In one embodiment, the manner of FIG. 4 can be a backup plan for the manner of FIG. 2. For example, the UE may perform a reception of a serving cell's CU ID and one or more candidate cells' CU ID. If the reception is failed (e.g., the UE cannot obtain the serving cell's CU ID or the one or more candidate cells' CU ID from the network configuration), the UE may transmit a negative-acknowledgment (NACK) to the network. In response to the NACK, the network may know that the UE cannot determine whether the intra-CU LTM configuration or the L3 mobility configuration should be applied based on the serving cell's CU ID or the one or more candidate cells' CU ID. Accordingly, the network may include an indication in a cell switch command to be transmitted to the UE, wherein the indication may indicate that the intra-CU LTM configuration or the L3 mobility configuration should be applied.

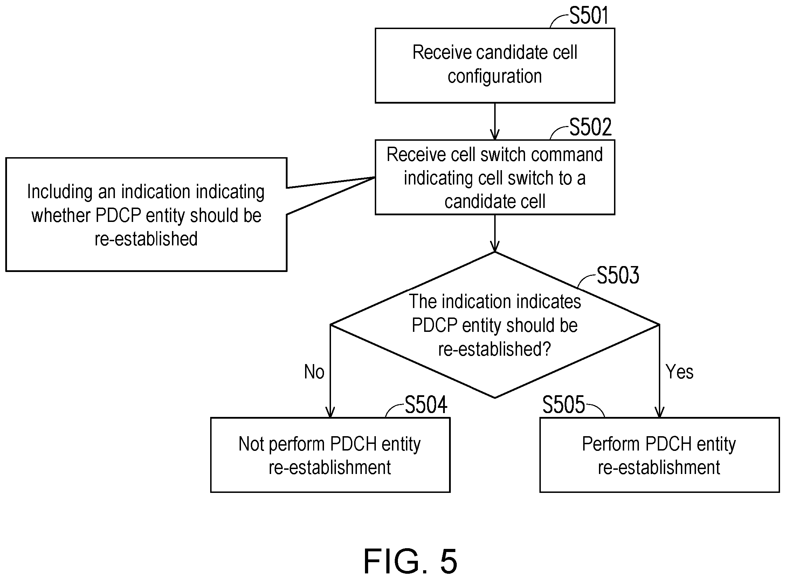

FIG. 5 illustrates a flowchart of re-establishment of PDCP entity according to one embodiment of the present disclosure. In step S501, a UE may receive a candidate cell configuration from a network. For example, the network may include the candidate cell configuration in a network configuration and may transmit the network configuration to the UE.

In step S502, the UE may receive a cell switch command from the network. The cell switch command may indicate the UE to perform cell switching to a target candidate cell. The UE may determine a target candidate cell to switch to according to the cell switch command. The cell switch command may further include an indication indicating that whether the PDCP entity should be re-established. For example, the cell switch command may include a 1-bit indication. If the value of the indication is true (e.g., 1), the indication indicates that the PDCP entity should be re-established. If the value of the indication is false (e.g., 0), the indication indicates that the PDCP entity should not be re-established.

In step S503, the UE may determine whether the PDCP entity of the UE should be re-established upon cell switching based on the indication. If the indication indicates that the PDCP entity should not be re-established, the UE may execute step S504. If the indication indicates that the PDCP entity should be re-established, the UE may execute step S505.

In step S504, the UE may not perform the PDCP entity re-establishment. In step S505, the UE may perform the PDCP entity re-establishment.

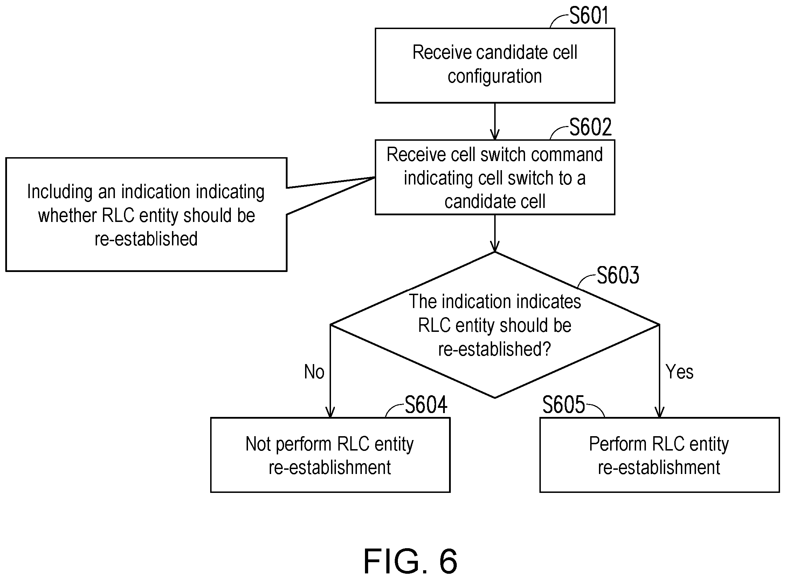

FIG. 6 illustrates a flowchart of re-establishment of RLC entity according to one embodiment of the present disclosure. In step S601, a UE may receive a candidate cell configuration from a network. For example, the network may include the candidate cell configuration in a network configuration and may transmit the network configuration to the UE.

In step S602, the UE may receive a cell switch command from the network. The cell switch command may indicate the UE to perform cell switching to a target candidate cell. The UE may determine a target candidate cell to switch to according to the cell switch command. The cell switch command may further include an indication indicating that whether the RLC entity should be re-established. For example, the cell switch command may include a 1-bit indication. If the value of the indication is true (e.g., 1), the indication indicates that the RLC entity should be re-established. If the value of the indication is false (e.g., 0), the indication indicates that the RLC entity should not be re-established.

In step S603, the UE may determine whether the RLC entity of the UE should be re-established upon cell switching based on the indication. If the indication indicates that the RLC entity should not be re-established, the UE may execute step S604. If the indication indicates that the RLC entity should be re-established, the UE may execute step S605.

In step S604, the UE may not perform the RLC entity re-establishment. In step S605, the UE may perform the RLC entity re-establishment.

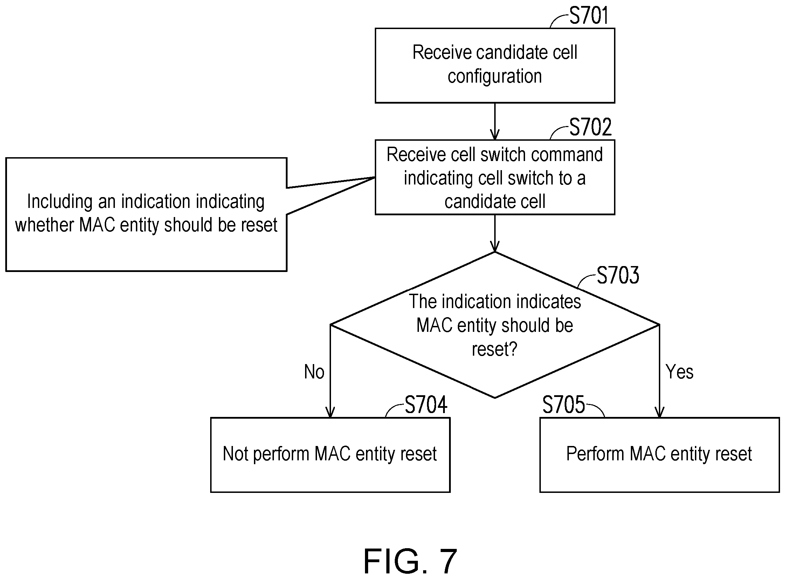

FIG. 7 illustrates a flowchart of reset of medium access control (MAC) entity according to one embodiment of the present disclosure. In step S701, a UE may receive a candidate cell configuration from a network. For example, the network may include the candidate cell configuration in a network configuration and may transmit the network configuration to the UE.

In step S702, the UE may receive a cell switch command from the network. The cell switch command may indicate the UE to perform cell switching to a target candidate cell. The UE may determine a target candidate cell to switch to according to the cell switch command. The cell switch command may further include an indication indicating that whether the MAC entity should be reset. For example, the cell switch command may include a 1-bit indication. If the value of the indication is true (e.g., 1), the indication indicates that the MAC entity should be reset. If the value of the indication is false (e.g., 0), the indication indicates that the MAC entity should not be reset.

In step S703, the UE may determine whether the MAC entity of the UE should be reset upon cell switching based on the indication. If the indication indicates that the MAC entity should not be reset, the UE may execute step S704. If the indication indicates that the MAC entity should be reset, the UE may execute step S705.

In step S704, the UE may not perform the MAC entity reset. In step S705, the UE may perform the MAC entity reset.

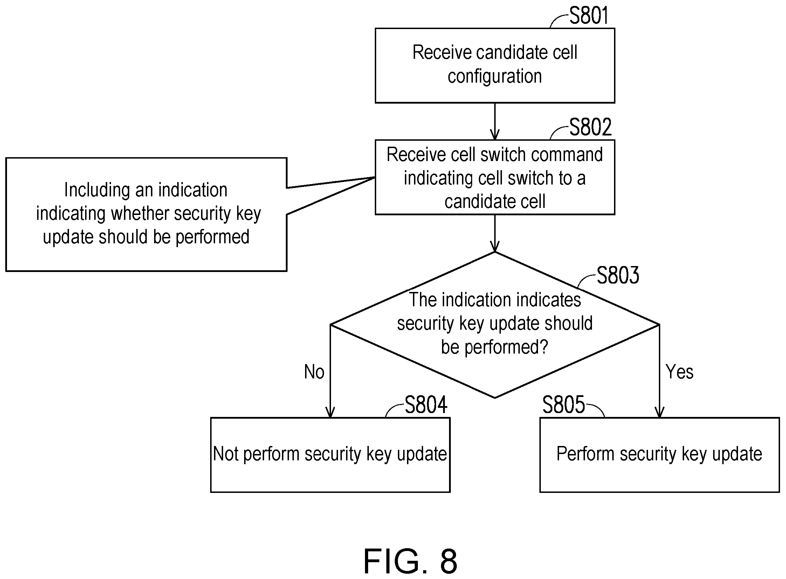

FIG. 8 illustrates a flowchart of update of security key according to one embodiment of the present disclosure. In step S801, a UE may receive a candidate cell configuration from a network. For example, the network may include the candidate cell configuration in a network configuration and may transmit the network configuration to the UE.

In step S802, the UE may receive a cell switch command from the network. The cell switch command may indicate the UE to perform cell switching to a target candidate cell. The UE may determine a target candidate cell to switch to according to the cell switch command. The cell switch command may further include an indication indicating that whether the security key should be update. For example, the cell switch command may include a 1-bit indication. If the value of the indication is true (e.g., 1), the indication indicates that the security key should be update. If the value of the indication is false (e.g., 0), the indication indicates that the security key should not be update.

In step S803, the UE may determine whether the security key update should be performed upon cell switching based on the indication. If the indication indicates that the security key update should not be performed, the UE may execute step S804. If the indication indicates that the security key update should be performed, the UE may execute step S805.

In step S804, the UE may not perform the security key update. In step S805, the UE may perform the security key update.

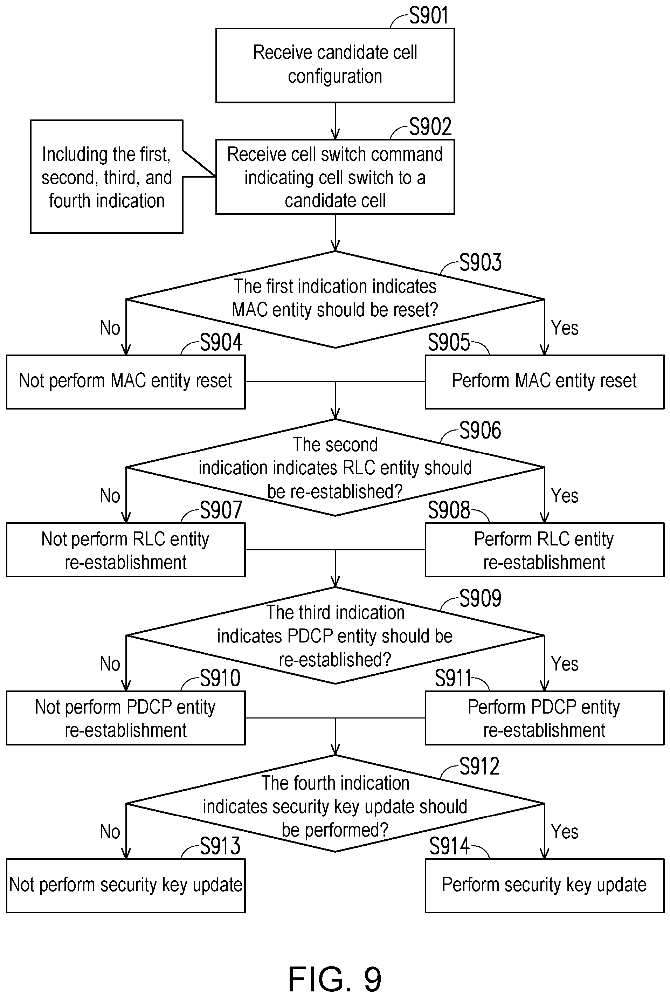

In one embodiment, a cell switch command may include a plurality of indications, wherein the plurality of indications may indicate information of MAC entity reset, RLC entity re-establishment, PDCP entity re-establishment, and security key update respectively. FIG. 9 illustrates a flowchart of cell switching according to one embodiment of the present disclosure. It should be noted that, the execution order of the steps in FIG. 9 is not restricted. For example, step S906 may be executed before step S903.

In step S901, a UE may receive a candidate cell configuration from a network. For example, the network may include the candidate cell configuration in a network configuration and may transmit the network configuration to the UE.

In step S902, the UE may receive a cell switch command from the network. The cell switch command may indicate the UE to perform cell switching to a target candidate cell. The UE may determine a target candidate cell to switch to according to the cell switch command. The cell switch command may further include a first indication, a second indication, a third indication, and a fourth indication.

In step S903, the UE may determine that whether the MAC entity of the UE should be reset according to the first indication. If the first indication indicates that the MAC entity should not be reset, the UE may not perform the MAC entity reset, as shown in step S904. If the first indication indicates that the MAC entity should be reset, the UE may perform the MAC entity reset, as shown in step S905.

In step S906, the UE may determine whether the RLC entity of the UE should be re-established according to the second indication. If the second indication indicates that the RLC entity should not be re-established, the UE may not perform the RLC entity re-establishment, as shown in step S907. If the second indication indicates that the RLC entity should be re-established, the UE may perform the RLC entity re-establishment, as shown in step S908.

In step S909, the UE may determine whether the PDCP entity of the UE should be re-established according to the third indication. If the third indication indicates that the PDCP entity should not be re-established, the UE may not perform the PDCP entity establishment, as shown in step S910. If the third indication indicates that the PDCP entity should be re-established, the UE may perform the PDCP entity re-establishment, as shown in step S911.

In step S912, the UE may determine whether the security key update of the UE should be performed according to the fourth indication. If the fourth indication indicates that the security key update should not be performed, the UE may not perform the security key update, as shown in step S913. If the fourth indication indicates that the security key update should be performed, the UE may perform the security key update, as shown in step S914.

In one embodiment, for a candidate cell surrounded by other candidate cells within the same CU, the L3 mobility configuration is optional. Specifically, the UE may determine whether a specific candidate cell and all adjacent cells of the specific candidate cell belong to the same CU. An adjacent cell of the specific candidate cell may include a cell that is geographically adjacent to the specific candidate cell, and there is no other cell positioned between the adjacent cell and the specific candidate cell. If the specific candidate cell and all adjacent cells belong to the same CU, the UE may always apply the intra-CU LTM configuration for cell switching associated with the specific candidate cell, whether the specific candidate cell is the serving cell or the target cell.

Take FIG. 3 as example. Assume that Cell 4, and all adjacent cells (e.g., Cell 3 and Cell 5) of Cell 4 belong to the same CU (e.g., CU 1). If Cell 4 is the serving cell of a UE, the UE can only perform intra-CU cell switching to Cell 3 or Cell 5. If Cell 4 is the target cell of a UE, the UE can only perform intra-CU cell switching from Cell 3 or Cell 5 to Cell 4. That is, the L3 mobility configuration for Cell 4 may be omitted. The UE may always apply intra-CU LTM configuration for cell switching associated with Cell 4.

In one embodiment, a network configuration transmitted from a network to a UE may include a measurement relaxation condition for each candidate cell. The UE may determine whether a candidate cell meets the measurement relaxation condition corresponding to the candidate cell. If the candidate cell meets the measurement relaxation condition, the UE may relax measurement for the candidate cell. If the candidate cell does not meet the relaxation condition, the UE may not relax measurement for the candidate cell.

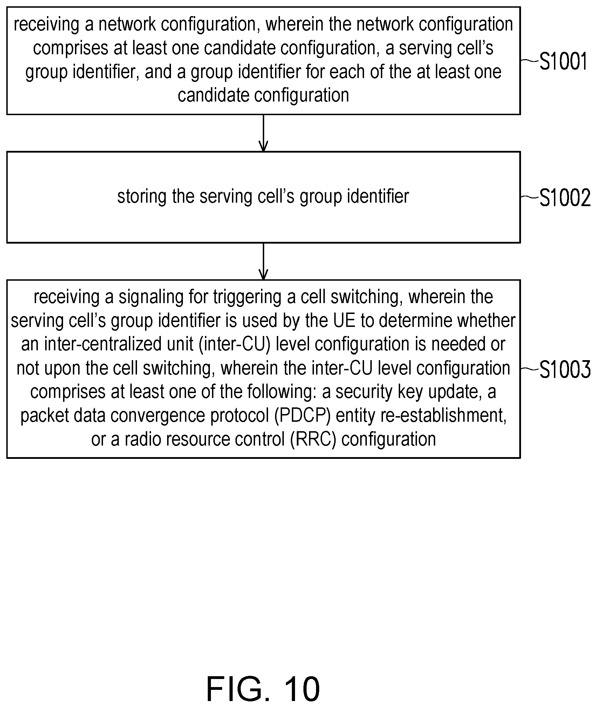

FIG. 10 illustrates a flowchart of a method of mobility management according to one embodiment of the present disclosure, wherein the method may be implemented by a UE. In step S1001, receiving a network configuration, wherein the network configuration comprises at least one candidate configuration, a serving cell's group identifier, and a group identifier for each of the at least one candidate configuration. In step S1002, storing the serving cell's group identifier. In step S1003, receiving a signaling for triggering a cell switching, wherein the serving cell's group identifier is used by the UE to determine whether an inter-centralized unit (inter-CU) level configuration is needed or not upon the cell switching, wherein the inter-CU level configuration comprises at least one of the following: a security key update, a packet data convergence protocol (PDCP) entity re-establishment, or a radio resource control (RRC) configuration.

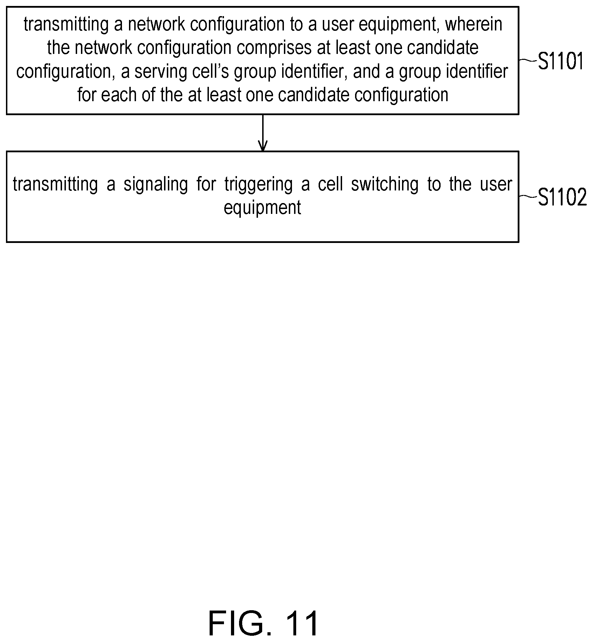

FIG. 11 illustrates a flowchart of a method of mobility management according to one embodiment of the present disclosure, wherein the method may be implemented by a network or a BS. In step S1101, transmitting a network configuration to a user equipment, wherein the network configuration comprises at least one candidate configuration, a serving cell's group identifier, and a group identifier for each of the at least one candidate configuration. In step S1102, transmitting a signaling for triggering a cell switching to the user equipment.

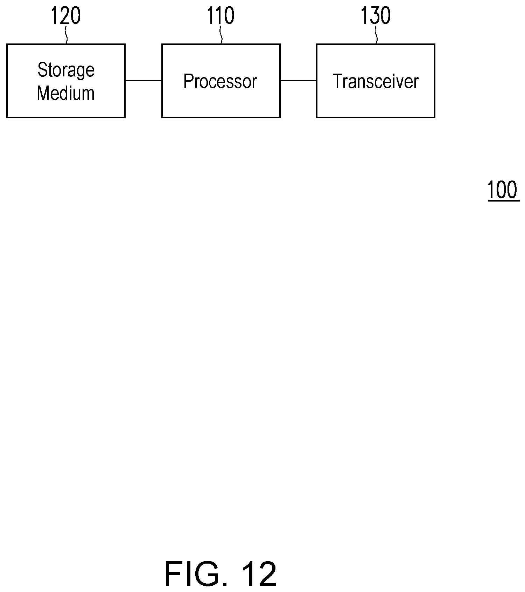

FIG. 12 illustrates a schematic diagram of a communication device 100 according to one embodiment of the present disclosure. The communication device 100 may include a processor 110, a storage medium 120, and a transceiver 130. The processor 110 is coupled to the storage medium 120 and the transceiver 130 and is configured to at least to implement the method as described in figures 1-11 as well as its exemplary embodiment and alternative variations. In one embodiment, the communication device 100 may be implemented as the UE or the network (e.g., network node or BS) as mentioned above.

The processor 110 could be implemented by using programmable units such as a microprocessor, a micro-controller, a digital signal processor (DSP), a field programmable gate array (FPGA), etc. The functions of the processor 110 may also be implemented with separate electronic devices or ICs. It should be noted that the functions of processor 110 may be implemented with either hardware or software.

The storage medium 120 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 110.

The transceiver 130 may be configured to transmit and receive signals respectively in the radio frequency. The transceiver 130 may also perform operations such as low noise amplifying, impedance matching, frequency mixing, up or down frequency conversion, filtering, amplifying, and so forth. The transceiver 130 may include one or more digital-to-analog (D/A) converters or analog-to-digital (A/D) converters which are configured to covert from an analog signal format to a digital signal format during uplink signal processing and from a digital signal format to an analog signal format during downlink signal processing. The transceiver 130 may include an antenna array which may include one or more antennas to transmit and receive omnidirectional antenna beams or directional antenna beams.

Based on the above, the disclosure may configure two sets of mobility configuration to the UE and may provide information to make the UE distinguish intra-CU mobility from inter-CU mobility, wherein the information may be transmitted to the UE via a network configuration or a cell switch command. The information may indicate a group ID in CU level or an indication for selecting a mobility configuration. The UE may perform intra-CU cell switching or inter-CU cell switching based on the provided information by using the corresponding mobility configuration. In the case of inter-CU cell switching, the L3 mobility configuration (or the inter-CU level configuration) may be applied. In the case of intra-CU mobility, applying LTM configuration is leveraged to improve mobility latency and interruption time compared to applying the L3 mobility configuration.

## Claims

1. A method of mobility management, suitable for a user equipment, UE (100), comprising:
receiving a network configuration, wherein the network configuration comprises at least one candidate configuration, a serving cell's group identifier, and a group identifier for each of the at least one candidate configuration;
storing the serving cell's group identifier; and
receiving a signaling for triggering a cell switching,
wherein the serving cell's group identifier is used by the UE (100) to determine whether an inter-centralized unit, inter-CU, level configuration is needed or not upon the cell switching,
wherein the inter-CU level configuration comprises at least one of the following: a security key update, a packet data convergence protocol, PDCP, entity re-establishment, or a radio resource control, RRC, configuration.

2. The method according to claim 1, wherein the signaling is corresponded to one of the at least one candidate configuration.

3. The method according to claim 2, wherein the step of determining whether the inter-CU level configuration is needed or not upon the cell switching comprising:
comparing the group identifier for the one of the at least one candidate configuration with the serving cell's group identifier; and
if the group identifier for the one of the at least one candidate configuration is not equal to the serving cell's group identifier, performing the inter-CU level configuration.

4. The method according to claim 3, further comprising:
if the group identifier for the one of the at least one candidate configuration is not equal to the serving cell's group identifier, replacing the stored serving cell's group identifier with the group identifier for the one of the at least one candidate configuration.

5. The method according to claim 1, wherein the signaling comprises at least one indication.

6. The method according to claim 5, wherein the at least one indication indicates whether the inter-CU level configuration is needed or not upon the cell switching.

7. The method according to claim 6, further comprising:
determining whether the inter-CU level configuration is needed or not upon the cell switching based on the at least one indication; and
in response to determining that the inter-CU level configuration is needed upon the cell switching, performing the inter-CU level configuration upon the cell switching.

8. The method according to claim 5, wherein the at least one indication indicates at least one of the following: whether the security key update is performed, whether the PDCP entity re-establishment is performed, whether a radio link control entity re-establishment is performed, or whether a medium access control entity reset is performed, upon the cell switching.

9. The method according to claim 5, wherein the at least one indication indicates whether the security key update is performed upon the cell switching.

10. The method according to claim 9, further comprising:
determining whether the security key update is performed upon the cell switching based on the at least one indication; and
in response to determining that the security key update is performed upon the cell switching, performing the security key update upon the cell switching.

11. The method according to claim 5, wherein the at least one indication indicates whether the PDCP entity re-establishment is performed upon the cell switching, wherein the method further comprises:
determining whether the PDCP entity re-establishment is performed upon the cell switching based on the at least one indication; and
in response to determining that the PDCP entity re-establishment is performed upon the cell switching, performing the PDCP entity re-establishment upon the cell switching.

12. The method according to claim 5, wherein the at least one indication indicates whether a radio link control entity re-establishment is performed upon the cell switching, wherein the method further comprises:
determining whether the radio link control entity re-establishment is performed upon the cell switching based on the at least one indication; and
in response to determining that the radio link control entity re-establishment is performed upon the cell switching, performing the radio link control entity re-establishment upon the cell switching.

13. The method according to claim 5, wherein the at least one indication indicates whether a medium access control entity reset is performed upon the cell switching, wherein the method further comprises:
determining whether the medium access control entity reset is performed upon the cell switching based on the at least one indication; and
in response to determining that the medium access control entity reset is performed upon the cell switching, performing the medium access control entity reset upon the cell switching.

14. The method according to claim 5, wherein the step of receiving the signaling comprising:
performing a reception of the serving cell's group identifier and the group identifier for each of the at least one candidate configuration; and
in response to the reception failing, receiving the signaling.

15. The method according to claim 1, wherein the step of determine whether the inter-CU level configuration is needed or not upon the cell switching comprising:
determining a candidate cell and all adjacent cells of the candidate cell belong to a centralized unit; and
determining the inter-CU level configuration is not needed in response to determining the candidate cell and the all adjacent cells belong to the centralized unit.

16. The method according to claim 1, wherein the network configuration further comprises a measurement relaxation condition for each candidate cell, and the method further comprises:
determining whether a candidate cell meets the measurement relaxation condition corresponding to the candidate cell; and
in response to determining that the candidate cell meets the measurement relaxation condition corresponding to the candidate cell, relaxing measurement for the candidate cell.

17. A method of mobility management, suitable for a base station (100), comprising:
transmitting a network configuration to a user equipment, wherein the network configuration comprises at least one candidate configuration, a serving cell's group identifier, and a group identifier for each of the at least one candidate configuration; and
transmitting a signaling for triggering a cell switching to the user equipment.

18. A user equipment, UE (100), comprising:
a transceiver (130); and
a processor (110), coupled to the transceiver (130), wherein the processor (110) is configured to:
receive, via the transceiver (130), a network configuration, wherein the network configuration comprises at least one candidate configuration, a serving cell's group identifier, and a group identifier for each of the at least one candidate configuration;
store the serving cell's group identifier; and
receive, via the transceiver (130), a signaling for triggering a cell switching,
wherein the serving cell's group identifier is used by the UE (100) to determine whether an inter-centralized unit, inter-CU, level configuration is needed or not upon the cell switching,
wherein the inter-CU level configuration comprises at least one of the following: a security key update, a packet data convergence protocol, PDCP, entity re-establishment, or a radio resource control, RRC, configuration.

19. A base station (100), comprising:
a transceiver (130); and
a processor (110), coupled to the transceiver (130), wherein the processor (110) is configured to:
transmit, via the transceiver (130), a network configuration to a user equipment, wherein the network configuration comprises at least one candidate configuration, a serving cell's group identifier, and a group identifier for each of the at least one candidate configuration; and
transmit, via the transceiver (130), a signaling for triggering a cell switching to the user equipment.
